# EUROPÄISCHE PATENTANMELDUNG

(11) **EP 2 506 271 A2**
(43) Veröffentlichungstag der Anmeldung: **03.10.2012**
(21) Anmeldenummer: 12001626.6
(22) Anmeldetag: 09.03.2012
(51) Int. Cl.: H01F 3/02, H01F 41/02

(54) **Verfahren zur Herstellung eines Blechpakets**

(30) Priorität: 31.03.2011 DE 102011015761
(71) Anmelder: Friedrich-Alexander-Universität Erlangen-Nürnberg, 91054 Erlangen (DE)
(72) Erfinder: Tremel, Jan, 96199 Zapfendorf (DE); Dobroschke, Andreas, 90768 Fürth (DE)
(74) Vertreter: FDST Patentanwälte

(57) **Zusammenfassung**

Verfahren (1) zur Herstellung eines Blechpakets (10), wobei Einzelbleche (3) mit wenigstens einer Ausnehmung (6, 7, 15, 18) vorgegebener Kontur gefertigt werden, die Einzeibleche (3) derart zu einem Stapel aufeinander gestapelt werden, dass mittels der Ausnehmungen (6, 7, 15, 18) in Stapelrichtung (13) wenigstens eine zumindest einseitig offene Kavität (9) gebildet wird, deren Querausdehnung (14) entlang der Stapelrichtung (13) variiert, die Kavität (9) mit einem härtbaren Füllmaterial (12) ausgefüllt wird, und das Füllmaterial (12) anschließend ausgehärtet wird, wobei die Einzeibleche (3) mittels Formschluss aneinander gefügt werden.

## Beschreibung

Die Erfindung betrifft ein Verfahren zur Herstellung eines Blochpakets, wobei Einzelbleche in einer Stapelrichtung zum Blechpaket gestapelt werden. Die Erfindung betrifft weiter ein solches, aus Einzelblechen gestapeltes Blechpaket. Derart hergestellte Blechpakete werden zur Ausbildung des Rotors oder des Stators einer elektrischen Maschine benötigt und dienen insbesondere zum Führen und Schlie-βen des magnetischen Flusses.

Elektrische Maschinen gehören heute zum alltäglichen Leben und sind von der industriellen Fertigung bis in den privaten Bereich hineln zu finden. Die elektrischen Maschinen werden hierbei in sogenannte Synchron- und Asynchronmaschinen unterteilt. Für industrielle Standardanwendungen, wie z. B. für Lüfter- oder für Bandantriebe, werden insbesondere Asynchronmaschinen in Normgrö-βen eingesetzt, Für hochdynamische Roboter- und Positioniersysteme werden üblicherweise Synchronmaschinen verwendet.

Der Aufbau der elektrischen Maschinen gleicht sich zu großen Teilen bei allen Bauformen. Die erzeugte mechanische Leistung wird über eine sich drehende Welle auf das anzutreibende Objekt übertragen. Auf der Welle ist der rotative Erregerteil angebracht der je nach Maschinenart Wicklungen, Magnete oder eingegossene Kurzschlussstäbe umfasst. Als Träger des Erregerteils wird mit Ausnahme von sehr kleinen Motoren auf die Welle aus Kostengründen in der Regel ein Blechpaket aus gestapelten Einzeibiechen aufgepresst, so dass Welle und Blechpaket einen nahezu untrennbaren Verbund eingehen. Der feststehende Gegenpart, der sogenannte Stator, besteht in aller Regel ebenfalls aus einem Blechpaket in Form eines Rohres aus gestapelten Einzelblechen, in dem die Hauptwicklungen der elektrischen Maschine angebracht sind.

Ein wesentliches Charakteristikum einer elektrischen Maschine ist die Verlustleistung, die sich durch eine mehr oder minder starke Erwärmung des gesamten Motors ausdrückt, Zu diesen Verlusten tragen beispielsweise der ohmsche Widerstand der Statorwickiung und die Ummagnetisierungsverluste des Blechpakets bei, die durch die Im Betrieb erzeugten wechselnden elektrischen Felder entstehen. Um diese Verluste möglichst gering zu haften, sind die Einzelbleche elektrisch zueinander isoliert. Dazu sind die Einzelbleche vor der Verarbeitung entweder mittels einer Trennschicht passiviert oder mit einer dünnen Lackschicht beidseitig isoliert. Durch die Verwendung elektrisch isolierter Einzeibleche wird die Ausbildung verlustbehafteter Wirbelströme vermieden.

Für die Montage der elektrischen Maschine wird es notwendig, die Einzelbleche des Blechpakets vorab zumindest soweit miteinander zu verbinden, dass ein problemloser Transport und ein kompakter Einbau ohne eine störende und nachteilige Vereinzelung ermöglicht ist. Nach dem Verpressen eines Rotorblechpakets ist das Blech in der elektrischen Maschine nahezu untrennbar mit der Antriebswelle verbunden. Nach der Bewicklung im Stator Ist auch das Statorblechpaket nicht mehr aufzutrennen. Es sei denn, die Wicklung würde wieder aus dem Stator entfernt werden, was allerdings nur in wenigen Spezialanwendungen bei Reparaturen oder einer Wiederbewicklung angewendet wird.

Zur Vermeidung der unerwünschten und nachteiligen Vereinzelung eines vorgefertigten Blechpakets ist das sogenannte Stanzpaketierverfahren bekannt. Dabei werden die mittels mehrerer Stanz- und Schneidschritte aus einer Blechrolle gefertigten Einzelbleche zusätzlich mit Verzahnungs- oder Verklammerungsstrukturen versehen, mit denen die Bleche untereinander verbunden werden. Ein solches Verfahren Ist beispielsweise in der DE 2 815 359 vorgeschlagen. Auch ist eine äußere Verklammerung der Einzelbleche des Blechpakets zu dessen Zusammenhalt bekannt.

Beide Verfahren weisen aber den Nachteil auf, dass durch die Einbringung der Verbindungs- und Klammerungsstrukturen Kurzschlüsse zwischen den Blechen eingebracht werden, die den Wirkungsgrad der elektrischen Maschine reduzieren. Dennoch hat sich insbesondere das Stanzpaketierverfahren in den letzten Jahren weitestgehend für die meisten Motoranwendungen durchgesetzt, da hier in einfacher Weise sauber gestapelte Blechpakete erzeugt werden können. Die Einbringung der zusätzlichen Klammerungsstrukturen Ist massentauglich und kann in den üblichen Merstellprozess der Bleche mittels mehrerer Stanz-, Press- und Schneidschritte problemlos integriert werden.

Weiter ist es bekannt, die insbesondere In einem mehrstufigen Stanz- und Schneidverfahren erzeugten Einzelbleche miteinander zu verkleben. Derartige Verfahren sind beispielsweise aus der DE 20 318 993 U1, der DE 3 535 573 A1, der DE 2 446 693 A1 und der EP 1 833 145 A2 bekannt.

Nachteilig bei den sogenannten Klebeverfahren ist jedoch die Empfindlichkeit der Klebstoffe gegenüber Schneidöl, das üblicherweise während des Pressens, Schneidens und Stanzens beständig im Werkzeug in Form eines Sprühnebels zugegeben wird, um die Standzeit des Werkzeugs zu erhöhen. Da der Klebstoff nicht mit dem Öl vermischt werden darf, muss bei einer Klebeapplikation auf das Schneidöl verzichtet werden, was die Standzeit des Werkzeugs drastisch verkürzt. So welsen Klebeapplikationen zwar nicht den Nachteil eines Kurzschlusses zwischen den Einzelblechen auf. Dieser Vorteil wird Jedoch durch die deutlich verringerte Standzeit des Werkzeugs zunichte gemacht. Zudem sind die benötigten Klebstoffe teuer, so dass die Klebeverfahren sich bislang in der Massenfertigung nicht durchgesetzt haben.

Aufgabe der Erfindung ist es, ein Verfahren zur Paketlerung von Einzelblechen anzugeben, welches massentauglich ist, die Einzelbleche ausreichend fest aneinander fügt, jedoch einen unerwünschten Kurzschluss zwischen den Elnzelblechen vermeidet. Eine weitere Aufgabe ist es, ein entsprechend hergestelltes Blechpaket mit verbundenen Einzelblechen anzugeben, wobei die Einzelbleche zueinander keinen elektrischen Kurzschluss zeigen.

Die erstgenannte Aufgabe wird erfingdungsgemäß durch ein Verfahren zur Herstellung eines Blechpakets gelöst, wobei Einzelbleche mit wenigstens einer Ausnehmung vorgegebener Kontur gefertigt werden, die Einzelbleche derart zu einem Stapel aufeinander gestapelt werden, dass mittels der Ausnehmungen in Stapelrichtung wenigstens eine zumindest einseitig offene Kavität gebildet wird, deren Querausdehnung entlang der Stapelrichtung variiert, die Kavität mit einem härtbaren Füllmaterial ausgefüllt wird, und das Füllmaterial anschließend ausgehärtet wird, wobei die Einzeibleche mittels Formschluss aneinander gefügt werden. Ein Stoffschluss der Einzelbleche mit dem Füllmaterial ist dabei nicht ausgeschlossen.

Die Erfindung geht dabei In einem ersten Schritt überraschend von der Überlegung aus, zum Verbinden der Einzeibleche auf das nicht massentaugliche Klebeverfahren zu verzichten. Gleichwohl soll das neuartige Verbindungsverfahren nicht zu einem Wirkungsgradverlust in elektrischen Maschinen durch unnötige Kurzschlüsse aufgrund mechanischer Verzahnungen der Einzelbleche führen.

In einem zweiten Schritt erkennt die Erfindung, dass sich das gewünschte Verbindungsverfahren durch einen Formsohluss der Einzelbleche realisieren lässt, wobei der Formschluss jedoch nicht über das Blechmaterial selbst erfolgt. Stattdessen werden in Einzelblechen vorhandene Ausnehmungen genutzt, die beim Stapeln der Einzelbleche übereinander eine zumindest einseitig offene Kavität bilden, deren Querausdehnung in Stapelrichtung variiert.

In Stapelrichtung betrachtet existieren somit in der Kavität Hinterschneidungen, Vertiefungen, Ausbuchtungen, Einschnitte usw" die beim Ausfüllen der Kavität mit einem Füllmaterial nach dessen Aushärtung zu einem Formschluss der aufeinander gestapelten Einzelbleche miteinander führen.

Zur Ausbildung der Kavität ist es für die Erfindung nicht notwendigerweise erforderlich, zusätzliche Ausnehmungen In die Einzeibleche einzubringen. Vielmehr kann zur vorbeschriebenen Verbindungstechnik grundsätzlich auch auf bereits vorhandene Ausnehmungen der Einzelbleche zurückgegriffen werden. Im einfachsten Fall weisen die beispielsweise durch Stanzen oder durch ein anderes Umformverfahren eingebrachten Ausnehmungen bereits selbst eine in Stapelrichtung variierende Querausdehnung auf. Beispielsweise kann durch einen Stanzvorgang aufgrund des verwendeten Werkzeugs die Wand einer solchen Ausnehmung eine konvexe oder konkave Form aufweisen. Werden die Einzelbleche dann mit ihren Ausnehmungen aufeinander gestapelt, weist die resultierende Kavität zwangsläufig In Stapelrichtung bereits die für einen Formschluss notwendige variable Querausdehnung auf.

Andererseits können Einzelbleche mit verschieden großen Ausnehmungen oder unterschiedlicher Kontur hergestellt werden. Werden diese Ausnehmungen unterschiedlicher Größe oder Kontur durch Stapeln der Einzelbleche übereinander angeordnet, so weist die gebildete Kavität In Stapelrichtung aufgrund der unterschiedlichen Größe oder Kontur der einzelnen Ausnehmungen wiederrum die für einen Formschluss erforderliche variable Querausdehnung auf.

Sind die Ausnehmungen als Öffnungen oder Bohrungen vorhanden, die die Einzelbleche durchsetzen, so kann nach Stapeln der Einzeibleche die entstehende Kavität vom ersten oder vom letzten Einzeiblech des Stapels aus mit dem Füllmaterial befüllt werden. Ebenso gut ist jedoch eine Geometrie vorstellbar, wobei durch die Ausnehmungen eine Kavität gebildet ist, die von einer Seite des Blechpakets aus befüllt werden kann. In einer diesbezüglichen Ausführungsvariante sind die Ausnehmungen beispielsweise als Randausnehmungen gebildet. Dadurch ergibt sich eine seitlich offene Kavität entlang des Blechpakets. Diese offene Kavität kann mittels eines entsprechenden Formwerkzeugs, gegen das der fertige Stapel angelehnt oder in das der Stapel eingesetzt wird, befüllt werden. Dabei bildet das Füllwerkzeug gewissermaßen eine Wand der Kavität, Bevorzugt wird dabei als Füllwerkzeug eine Stapelwanne verwendet, in die während des Herstellungsverfahrens die im Durchlaufverfahren hergestellten Einzelbleche bereits zum Blechpaket gestapelt werden.

Für die Erfindung ist es nicht notwendigerweise erforderlich, die gebildete Kavität vollständig mit dem Füllmaterial auszufüllen. Eine Vereinzelung des Blechpakets soll bis zur Montage der elektrischen Maschinen vermieden sein. Insofern genügt den Anforderungen eines Zusammenhalts der Einzelbleche gegebenenfalls bereits ein sich durch das Füllmaterial ergebender suboptimaler Formschluss, In dem die Hinterschnitte, Vertiefungen, Einkerbungen etc. der Kavität nicht vollständig ausgefüllt sind.

Das Füllmaterial kann in dünnflüssiger bis zähviskoser Form in die Kavität eingebracht werden. Die Verteilung des eingebrachten Füllmaterials kann hierbei durch Gravitation. Vibration oder durch mechanische Stöße unterstützt werden. Bevorzugt wird das Füllmaterial jedoch in die Kavität eingepresst. Durch Einpressen wird in einfacher Weise eine ausreichende Befüllung der vorhandenen Querräume der Kavität erreicht.

In einer weiter bevorzugten Ausgestaltungsvariante wird die Kavität mit dem Füllmaterial ausgeschäumt. Mit anderen Worten härtet das eingebrachte Füllmaterial unter einer Volumenausdehnung aus. In diesem Fall kann auf ein Einpressen auch verzichtet werden. Beispielsweise wird das Füllmaterial mittels einer Hohlnadel in den Innenraum der Kavität eingebracht, wobei es anschließend unter Volumenausdehnung die Kavität ausfüllt und aushärtet.

Vorteilhafterweise wird als Füllmaterial ein Thermoplast verwendet. Ein Thermoplast erlaubt es, in die Kavität mittels Extrusion eingebracht zu werden. Dabei wird das erhitzte und verflüssigte Füllmaterial unter Druck mit einer Düse oder dergleichen in die Kavität eingespritzt. Anschließend härtet das Füllmaterial durch Abkühlung aus. Alternativ kann als Füllmaterial ein selbst aushärtendes Harzsystem verwendet werden. Dabei Ist es Insbesondere vorstellbar, ein Zwei-Komponenten-System einzusetzen.

Zu einer einfachen Integration des hier angegebenen Verbindungsverfahrens in den Fertigungsablauf der Einzeibleche werden die Ausnehmungen zweckmäßigerweise eingestanzt. Da die für Blechpakete vorgesehenen Einzelbleche in der Massenfertigung üblicherweise durch Umform- und Stanzprozesse aus einer Endlosblechrolle hergestellt und auf Band durch geeignete Formwerkzeuge bearbeitet werden, stellt eine derartige Einbringung zusätzlicher Ausnehmungen keine Beschränkung der Erfindung im Hinblick auf eine Massentauglichkeit dar.

Der Befüllungsprozess der im Stapel gebildeten Kavität wird bevorzugt am Ende des Fertigungsverfahrens vorgenommen. üblicherweise werden die im Durchlaufverfahren gebildeten Einzeibleche am Ende des Prozesses in einer Stapelwanne orientiert abgelegt und aufeinander gepresst. Der Befüllungsvorgang kann zweckmäßigerweise dann unmittelbar am in einer solchen Stapelwanne abgelegten Blechpaket vorgenommen werden.

In einer vorteilhaften Ausführungsvariante wird die Kavität im Blechpaket durch eine Rotation gleicher Einzelbleche beim Stapeln hergestellt. Dazu werden beispielsweise in jedem Einzelblech drehsymmetrisch angeordnete Ausnehmungen verschiedener Größe eingebracht. Beim Stapel werden dann die Einzelbleche jeweils verdreht aufeinander abgelegt, wobei die Ausnehmungen unterschiedlicher Größe jeweils miteinander In Deckung geraten. Alternativ unterscheiden sich die In Deckung übereinander gebrachten Ausnehmungen nicht durch ihre Größe, sondern durch ihre Formgebung voneinander.

In einer einfach zu verwirklichenden Variante sind die Ausnehmungen als Randausnehmungen hergestellt, wobei die sich ergebende Randkavität gegen ein äu-βeres Formwerkzeug gefüllt wird. In einer hierzu bevorzugten, well kostengüristigen Ausführungsvariante werden die Einzelbleche mit wenigsten einer Randausnehmung hergestellt und derart gegeneinander rotiert gestapelt, dass sich in Stapelrichtung eine Randausnehmung mit einem ausnehmungsfreien Rand abwechselt. Dazu wird insbesondere nur in jedes zweite Blech eine Randausnehmung eingebracht, beispielsweise In Form einer abgerundeten Ecke. Das Blechpaket wird dann mit Abstand zu einem äußeren Formwerkzeug gehalten, und die entstehende Randkavität zwischen dem Blechpaket und dem Formwerkzeug befüllt,

Gemäß einer weiteren Ausführungsvariante werden zwei Sorten von Einzelblechen hergestellt, deren Ausnehmungen sich zueinander Im Wesentlichen überlappen, sich jedoch in ihrer Kontur voneinander unterscheiden, wobei die zwei Sorten von Einzelblechen abwechselnd aufeinander gestapelt werden.

In einer vorteilhaften Weiterbildung werden die Einzelbleche vor dem Stapeln zur elektrischen Isolierung oberflächenbeschlchtet, Insbesondere lackiert oder phosphatlert.

Die zweitgenannte Aufgabe wird erfindungsgemäß gelöst durch ein Blechpaket mit einer Anzahl von in einer Stapelrichtung übereinander gestapelten Einzelblechen, wobei die Einzelbleche Ausnehmungen aufweisen, die in Stapelrichtung wenigstens eine zumindest einseitig offene Kavität bilden, deren Querausdehnung entlang der Stapelrichtung variiert, und wobei die Kavität mit einem Füllmaterial ausgefällt ist, wodurch die Einzelbleche mittels Formschluss aneinander gefügt sind.

Die für das Verfahren genannten vorteilhaften Ausgestaltungsvarianten können hierbei sinngemäß auf das Blechpaket übertragen werden. Das entsprechend gefertigte Blechpaket weist hierbei die beschriebenen Vorteile auf.

Ausführungsbelspiele der Erfindung werden anhand einer Zeichnung näher erläutert. Dabei zeigen:
- Fig. 1:: schematisch ein Ablaufschema für ein Verfahren zur Herstellung eines gefügten Blechpaketes,
- Fig. 2:: die Herstellung eines gefügten Blechpakets durch Stapeln von Ronden,
- Fig. 3:: die Herstellung eines gefügten Blechpakets durch Füllen einer Randkavität,
- Fig. 4:: schematisch ein erstes und ein zweites Einzeiblech mit Ausnehmungen unterschiedlicher Größe und
- Fig. 5:: in einem Schnitt schematisch die Form einer gestanzten Öffnung in Stapelrichtung.

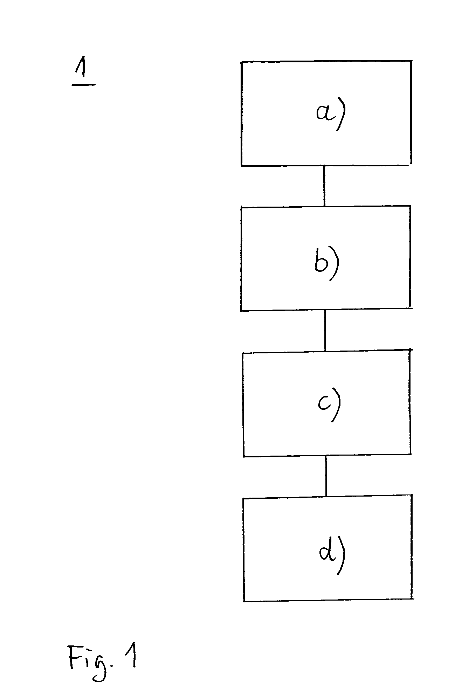

In Figur 1 ist schematisch ein Ablaufschema für ein Herstellungsverfahren 1 eines gefügten Blochpakets aus Einzelblechen dargestellt. In einem ersten Schritt a werden zunächst Einzelbleche mit wenigstens einer Ausnehmung vorgegebener Kontur gefertigt. Die Herstellung der Einzeibleche erfolgt hierbei in einem Pressensystem, bei denen das Blech von einer Rolle abgerollt wird und mehrere Stanz- und/oder Schneidschritte in einem mehrstufigen Werkzeug innerhalb mehrerer Hübe durchläuft. Anschließend werden die ausgeschnittenen Einzelbleche und das Verschnittblech getrennt. Die Einzelbleche weisen hierbei drehsymmetrisch angeordnete Ausnehmungen verschiedener Größe auf. Beispielhaft sind bezüglich einer Symmetrieachse zwei gegenüberliegend angeordnete Ausnehmungen verschiedener Größe eingebracht.

Anschließend werden in Schritt b die Einzelbleche in einer nachfolgenden Station sortiert und gestapelt. Dabei wird jedes zweite Einzelblech um 180° gedreht, so dass in Stapelrichtung insgesamt zwei durchgehende Kavitäten entstehen, Innerhalb derer sich kleine und große Ausnehmungen abwechseln. Das Blech der Rolle ist phosphatiert, so dass die gestapelten Einzelbleche zueinander elektrisch isoliert sind.

Weist der Stapel an Einzeiblechen eine gewünschte Anzahl an Blechen oder eine gewünschte Stapelhöhe auf, so werden die beiden in Stapelrichtung durchgehenden Kavitäten in Schritt c mit einem Füllmaterial befüllt. Hierzu wird dem Stapel von oben ein entsprechend konstruiertes Extrudierwerkzeug mit zwei Austrittsdüsen aufgesetzt. Die Austrittsdüsen münden dabei in die jeweilige Öffnung der beiden durchgehenden Kavitäten. Anschließend wird in einem Arbeitsschritt ein Thermoplast In beide Kavitäten eingepresst. Während des Einpressens wird der Stapel mit einem geeigneten Presswerkzeug in Stapelrichtung gepresst, so dass die Einzelbleche planar aufeinander liegen.

Anschließend wird das Extrusionswerkzeug in Schritt d entfernt und das eingepresste Füllmaterial ausgehärtet. Nach dem Aushärten sind die Einzelbleche des Blechpakets durch Formschluss über das ausgehärtete Füllmaterial in der Kavität miteinander gefügt bzw. verbunden.

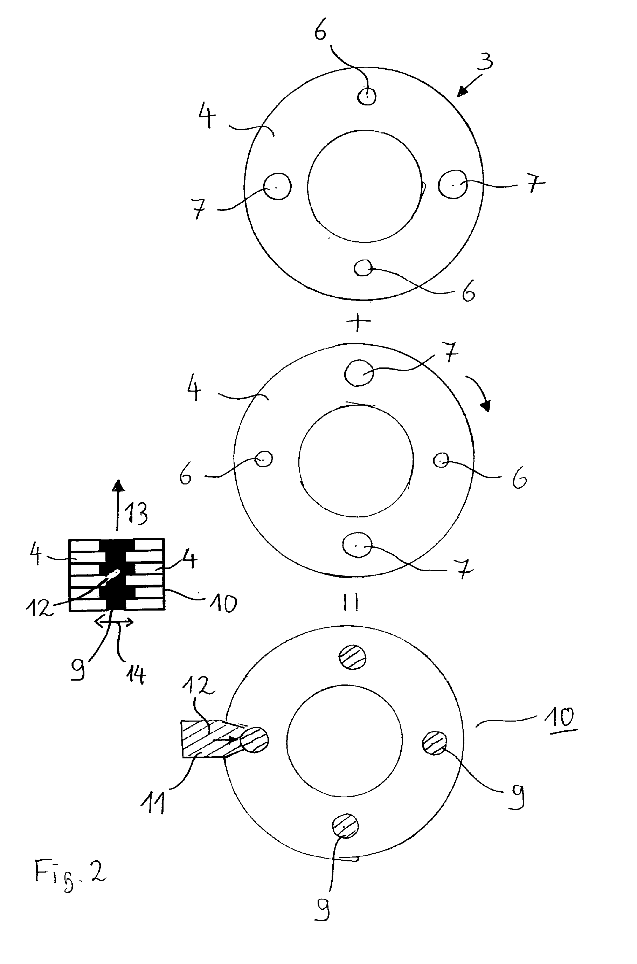

In Figur 2 Ist eine Stapelung von Einzelblechen 3 dargestellt, die jeweils als Ronden 4 ausgebildet sind. Jede Ronde 4 weist hierbei bezüglicher ihrer Rotationsachse jeweils zwei gegenüberliegend angeordnete kleine Ausnehmungen 6 und hierzu um 90° verdreht, zwei gegenüberliegend angeordnete große Ausnehmungen 7 auf.

Beim Stapeln wird jede zweite Ronde 4 um 90° verdreht, so dass insgesamt vier durchgehende Kavitäten 9 resultierten. In jeder dieser Kavitäten 9 wechseln sich in Stapelrichtung kleine Ausnehmungen 6 mit großen Ausnehmungen 7 ab.

Sind genügend viele der Ronden 4 zu dem fertigen Blechpaket 10 gestapelt, wird jede der gebildeten Kavitäten 9 mittels eines Extruderwerkzeugs 11 mit einem aushärtenden Füllmaterial 12 befüllt. Nach Aushärtung des Füllmaterials 12 sind die einzelnen Ronden 4 bzw. Einzeibleche 3 über einen Formschluss miteinander zu einem Blechpaket 10 gefügt. Dabei resultiert der Formschluss aus den in Stapelrichtung jeweils variierenden Querausdehnungen der einzelnen Kavitäten 9.

Zur Veranschaulichung ist in Figur 2 ein Schnitt durch eine der sich ergebenden Kavitäten 9 des Blechpakets 10 dargestellt. Man erkennt hierbei die In Stapelrichtung 13 sich in der Kavität 9 abwechselnden kleinen Ausnehmungen 6 und gro-βen Ausnehmungen 7. Hierdurch weist die Kavität 9 in Stapelrichtung 13 eine variierende Querausdehnung 14 auf.

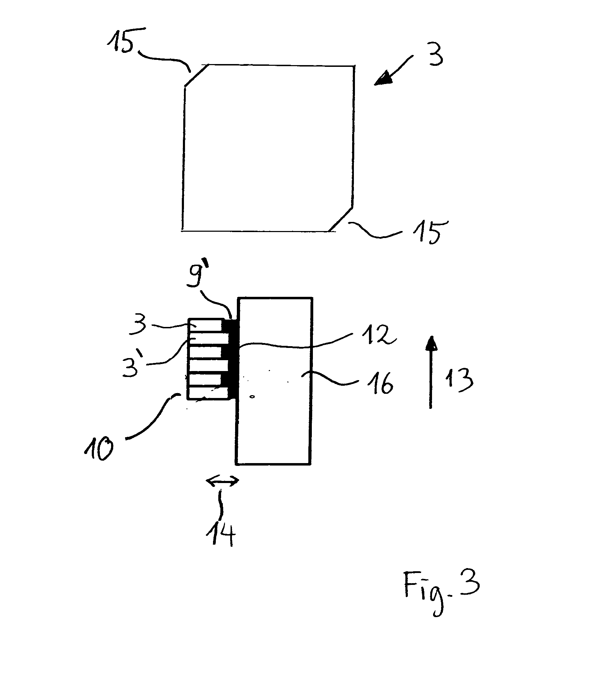

In Figur 3 ist ein anderes Einzelblech 3 zum Ausbilden eines Blechpakets dargestellt. Das Einzelblech 3 ist schematisch mit einer quadratischen Form dargestellt. Dabei ist jede zweite Ecke mit einer Randausnehmung 15 versehen. Beim Stapeln der Einzelbleche 3 gemäß Figur 3 wird wiederum jedes zweite Einzelblech 3 um 90° verdreht. An den Ecken der Einzelbleche 3 resultiert in Stapelrichtung 13 insofern eine Abfolge derart, dass sich eine Randausnehmung 15 mit einer vollständig ausgebildeten Ecke abwechselt.

Anschließend wird das gebildete Blechpaket 10 an den jeweiligen Ecken mit Abstand einem äußeren Formwerkzeug 16 angelegt. Die an den Ecken hierdurch gebildete Randkavität 9 wird mit einem Füllmaterial 12 befüllt, welches anschlie-βend aushärtet. Die Abfolge an den Ecken in Stapelrichtung 13 derart, dass sich eine Ecke mit einer Randausnehmung abwechseln, ist in der Schnittdarstellung gemäß Figur 3 deutlich erkennbar. In Stapelrichtung 13 wechseln sich ein Einzelblech 3 jeweils mit einem gedrehten Einzelblech 3' ab.

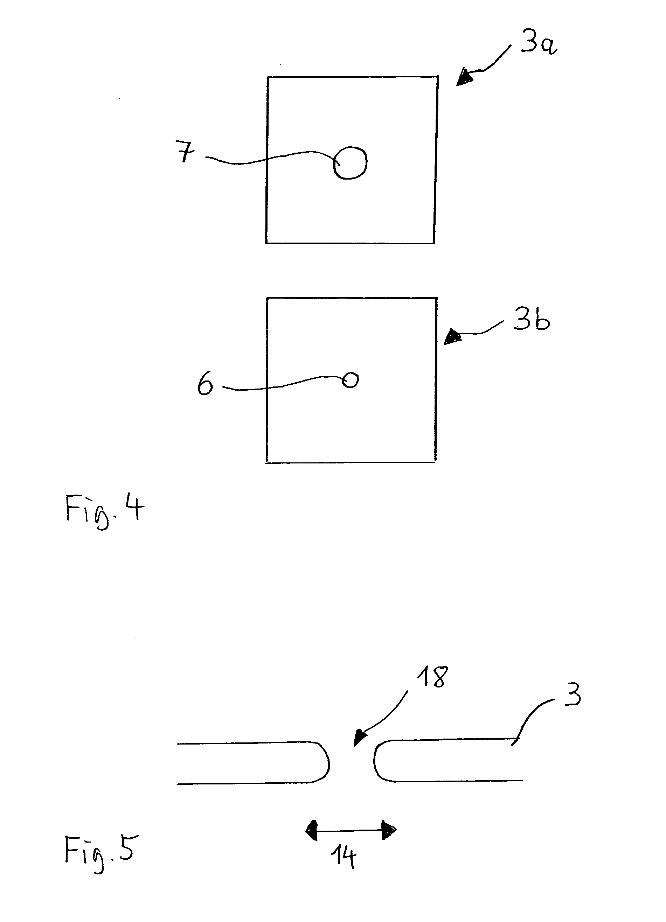

Figur 4 zeigt ein erstes Einzelblech 3a und ein zweites Einzelblech 3b. Beide Einzelbleche weisen eine etwa quadratische Form auf. In das erste Einzelblech 3a ist etwa mittig eine große Ausnehmung 7 eingebracht Das zweite Einzelblech 3b zeigt mittig eine kleine Ausnehmung 6.

Zur Ausbildung eines gefügten Blechpakets werden abwechselnd ein erstes Einzelblech 3a und ein zweites Einzelblech 3b aufeinander gestapelt. Dabei kommen die große Ausnehmung 7 und die kleine Ausnehmung 6 jeweils in Deckung. In Stapelrichtung wechseln sich somit eine große Ausnehmung 7 und eine kleine Ausnehmung 6 ab. Es resultiert erneut eine durchgehende Kavität, die in Stapelrichtung eine variierende Querausdehnung aufweist. Durch Füllen der Kavität mit einem aushärtbarem Füllmaterial wird die Fügung der Einzelbleche 3a, 3b zum fertigen Blechpaket erreicht. Die Gefahr einer Vereinzelung des derart hergestellten Blechpakets ist vermieden.

In Figur 5 ist in einem Schnitt durch ein Einzelblech 3 die Randform einer Stanzausnehmung 18 erkennbar. Die Wandung jeder Stanzausnehmung 18 zeigt aufgrund des verwendeten Stanzwerkzeugs eine konvexe Form. Die Stanzausnehmung 18 als solche weist eine in Stapelrichtung 13 variierende Querausdehnung 14 auf. Werden solche mit einer einfachen Stanzausnehmung 18 versehene Einzelbleche 3 übereinander gestapelt, geraten die einzelnen Stanzausnehmungen 18 in Stapelrichtung übereinander in Deckung. Es resultiert durch die konvexe Form der Wandung eine Kavität, die auch insgesamt eine variable Querausdehnung aufweist. Ohne weitergehende Maßnahmen kann durch die Befüllung der derart gebildeten Kavität mit einem aushärtbaren Füllmaterial ein Formschluss der übereinander gestapelten Einzelbleche 3 gemäß Figur 5 hergestellt werden.

Die Erfindung bietet grundsätzlich noch den weiteren Vorteil, dass die miteinander gefügten Einzelbleche bei Bedarf auch wieder voneinander getrennt werden können. Wird als Füllmaterial beispielsweise ein Thermoplast verwendet, so wird der Formschluss der Einzelbleche durch Erhitzen und Verflüssigung des Füllmaterials aufgehoben. Die Einzelbleche können entnommen werden. Dieser Vorteil des beschriebenen Verfahrens Ist für Austausch- und Reparaturmaßnahmen an elektrischen Maschinen von Bedeutung. Beispielsweise können die Statorblechpakete bei defekten Wicklungen geöffnet und so die Wicklungen ausgetauscht werden.

### Bezugszeichenliste

- 1: Verfahren
- 3: Einzelblech
- 4: Ronde
- 6: kleine Ausnehmung
- 7: große Ausnehmung
- 9: Kavität
- 10: Blechpaket
- 11: Extruder
- 12: Hüllmaterial
- 13: Stapelrichtung
- 14: Querausdehnung
- 15: Randausnehmung
- 16: Formwerkzeug
- 18: Stanzausnehmung

- a): Einzelblechferägung
- b): Stapelung
- c): Füllen der Kavität
- d): Aushärtung

## Patentansprüche

1. Verfahren (1) zur Herstellung eines Blechpakets (10), wobei
- Einzelbleche (3) mit wenigstens einer Ausnehmung (6, 7, 15, 18) vorgegebener Kontur gefertigt werden,
- die Einzelbleche (3) derart zu einem Stapel aufeinander gestapelt werden, dass mittels der Ausnehmungen (6, 7, 15, 18) in Stapeirichtung (13) wenigstens eine zumindest einseitig offene Kavität (9) gebildet wird, deren Querausdehnung (14) entlang der Stapelrichtung (13) variiert.
- die Kavität (9) mit einem härtbaren Füllmaterial (12) ausgefüllt wird, und
- das Füllmaterial (12) anschließend ausgehärtet wird, wobei die Einzelbleche (3) mittels Formschluss aneinander gefügt werden.

2. Verfahren (1) nach Anspruch 1,
wobei das Füllmaterial (12) in die Kavität (9) eingepresst wird.

3. Verfahren (1) nach Anspruch 1 oder 2.
wobei die Kavität (9) mit dem Füllmaterial (12) ausgeschäumt wird.

4. Verfahren (1) nach einem der vorhergehenden Ansprüche,
wobei als Füllmaterial (12) ein Thermoplast oder ein selbstaushärtendes Harzsystem verwendet wird.

5. Verfahren (1) nach einem der vorhergehenden Ansprüche,
wobei die Ausnehmungen (16) eingestanzt werden.

6. Verfahren (1) nach einem der vorhergehenden Ansprüche,
wobei die Ausnehmungen (18) als solche in Stapelrichtung (13) mit einer variierenden Querausdehnung (14) hergestellt werden.

7. Verfahren (1) nach einem der vorhergehenden Ansprüche,
wobei die Kavität (9) durch eine Rotation gleicher Einzelbleche (3) beim Stapeln hergestellt wird.

8. Verfahren (1) nach Anspruch 7,
wobei die Einzelbleche (3) jeweils mit wenigstens zwei Ausnehmungen (6, 7) unterschiedlicher Kontur hergestellt werden, die durch eine Rotation im Wesentlichen in Deckung bringbar sind.

9. Verfahren (1) nach einem der vorhergehenden Ansprüche,
wobei die Ausnehmungen als Randausnehmungen (15) hergestellt werden, und wobei die sich ergebende Randkavität (9') gegen ein äußeres Formwerkzeug (16) gefüllt wird.

10. Verfahren (1) nach Anspruch 7 und 9.
wobei die Einzelbleche (3) mit wenigstens einer Randausnehmung (15) hergestellt und derart gegeneinander rotiert gestapelt werden, dass sich in Stapelrichtung eine Randausnehmung (15) mit einem ausnehmungsfreien Rand abwechselt

11. Verfahren (1) nach einem der vorhergehenden Ansprüche,
wobei zwei Sorten von Einzelblechen (3a, 3b) hergestellt werden, deren Ausnehmungen (6, 7) sich zueinander im Wesentlichen überlappen, sich jedoch in ihrer Kontur voneinander unterscheiden, und wobei die zwei Sorten von Einzelblechen (3a, 3b) abwechseind aufeinander gestapelt werden.

12. Verfahren (1) nach einem der vorhergehenden Ansprüche,
wobei die Einzelbleche (3) durch Stanzen aus einem Blochstreifen hergestellt werden.

13. Verfahren (1) nach einem der vorhergehenden Ansprüche,
wobei zur elektrischen Isolierung oberflächenbeschichtete, Insbesondere lackierte oder phosphatierte, Einzelbleche gestapelt werden.

14. Blechpaket (10) mit einer Anzahl von in einer Stapeirichtung (13) übereinander gestapelten Einzelblechen (3), wobei die Einzelbleche (3) Ausnehmungen (6, 7, 15, 18) aufweisen, die in Stapelrichtung (13) wenigstens eine zumindest einseitig offene Kavität (9) bilden, deren Querausdehnung (14) entlang der Stapelrichtung (13) variiert, und wobei die Kavität (9) mit einem Füllmaterial (12) ausgefüllt ist, wodurch die Einzelbleche (3) mittels Formschluss aneinander gefügt sind.
